# EUROPEAN PATENT APPLICATION

(11) **EP 2 985 705 A2**
(43) Date of publication of application: **17.02.2016**
(21) Application number: 15179138.1
(22) Date of filing: 30.07.2015
(51) Int. Cl.: G06F 17/30, H04L 29/08

(54) **WEBPAGE ACCESS METHOD AND APPARATUS, AND ROUTER**

(30) Priority: 13.08.2014 CN 201410398182
(71) Applicant: Xiaomi Inc., Beijing 100085 (CN)
(72) Inventor: CHEN, Xianlin, 100085 Haidian District (CN); LI, Zheng, 100085 Haidian District (CN); LIU, Tiejun, 100085 Haidian District (CN)
(74) Representative: Robson, Aidan John

(57) **Abstract**

The present disclosure relates to a webpage access method and apparatus, and a router. The method includes: receiving (101) a webpage access request from a terminal, the webpage access request including a target URL; conducting (102) a search in stored local URLs according to the target URL; if the target URL is detected in the local URLs, acquiring (103) a target webpage resource corresponding to the target URL from stored local webpage resources; and sending (104) the target webpage resource to the terminal. Since the router may directly return locally stored webpage resource to the terminal, the time elapsed when target webpage resource is transmitted from the public network where the server is located to the local area network where the router is located is saved, thus the speed of obtaining target webpage resource by the terminal is increased, such that terminal user can quickly browse the target webpage.

## Description

### TECHNICAL FIELD

The present disclosure relates to the field of communications technologies, and more particularly, to a webpage access method and apparatus, and a router.

### BACKGROUND

Under a wireless local area network, a terminal can access the public network via a router, so as to access servers configured on the public network for different websites. Typically, a user enters, on a browser of the terminal, a uniform resource locator (URL) of a target webpage to be accessed; and the router enables its own routing function and transmits the URL to the public network, and then returns a target webpage resource on the server corresponding to the URL to the terminal. In this way, the terminal user successfully accesses the target webpage.

In the prior art, however, the terminal can only acquire in real time the webpage resource corresponding to a URL via the router. The webpage resource is transmitted from the public network where the server is located to the router in the local area network, and then forwarded by the router to the terminal. This process takes a relatively long transmission time, and as a result, the terminal user is unable to quickly browse the target webpage.

### SUMMARY

The present disclosure provides a webpage access method and apparatus, and a router, to address the problem in the prior art that a target webpage cannot be quickly accessed.

According to a first aspect of embodiments of the present disclosure, a webpage access method is provided. The method includes:
receiving a webpage access request from a terminal, the webpage access request including a target uniform resource locator (URL);
conducting a search in stored local URLs for the target URL;
if the target URL is detected in the local URLs, acquiring a target webpage resource corresponding to the target URL from stored local webpage resources; and
sending the target webpage resource to the terminal.

Optionally, prior to receiving a webpage access request from a terminal, the method further includes:
obtaining the local URLs, the local URLs including at least one URL, the at least one URL being a URL of a webpage resource repeatedly access by a terminal user; and
storing the local URLs, and storing a local webpage resource constituted by the webpage resource corresponding to the at least one URL.

Optionally, the obtaining the local URLs includes:
acquiring a user white list from a server, the user white list including at least one URL of the webpage resource corresponding to the repeated access of the terminal user, the at least one URL being generated by the server according to a predetermined strategy; and
generating the local URLs by parsing URLs in the user white list.

Optionally, the acquiring a user white list from a server includes:
sending a white list acquisition request to the server according to a first defined cycle time, the white list acquisition request including a first router identifier, a corresponding relationship between various router identifiers and the user white lists being stored on the server; and
receiving a user white list corresponding to the first router identifier from the server after the server conducts a search in the corresponding relationship.

Optionally, the storing the local URLs includes:
storing the local URLs into a database configured in a local disk; and/or
caching the local URLs into a memory assigned to a kernel.

Optionally, the method further includes:
defining an aging time for each URL in the local URLs stored in the database;
scanning the aging time in the database according to a second defined cycle time; and
deleting, according to a scanning result, an expired URL whose aging time expires from the local URLs, and deleting a webpage resource corresponding to the expired URL from the local webpage resources.

Optionally, the storing a local webpage resource constituted by the webpage resource corresponding to the at least one URL includes:
downloading a webpage resource corresponding to each URL of the at least one URL from a server;
generating a local storage address of each webpage resource corresponding to the each URL, the local storage address being identified by using a Hash value of a URL corresponding to the each webpage resource and a webpage resource storage root directory; and
storing the each webpage resource into a local disk according to the local storage address of the each webpage resource.

Optionally, the acquiring a target webpage resource corresponding to the target URL from stored local webpage resources includes:
sending the target URL to a designated port monitored by a web service;
when the web service has monitored the target URL at the designated port, determining a local storage address of the target webpage resource according to a Hash value of the target URL and the webpage resource storage root directory; and
acquiring the target webpage resource from the local disk according to the local storage address of the target webpage resource.

According to a second aspect of embodiments of the present disclosure, a webpage access apparatus is provided. The apparatus includes:
a receiving unit, configured to receive a webpage access request from a terminal, the webpage access request including a target uniform resource locator (URL);
a searching unit, configured to conduct a search in stored local URLs for the target URL;
an acquiring unit, configured to acquire a target webpage resource corresponding to the target URL from stored local webpage resources if the target URL is detected in the local URLs; and
a sending unit, configured to send the target webpage resource to the terminal.

Optionally, the apparatus further includes:
an obtaining unit, configured to obtain the local URLs, the local URLs including at least one URL, the at least one URL being a URL of a webpage resource corresponding to an access tendency of a terminal user;
a first storing unit, configured to store the local URLs; and
a second storing unit, configured to store a local webpage resource constituted by the webpage resource corresponding to the at least one URL.

Optionally, the obtaining unit includes:
a white list acquiring subunit, configured to acquire a user white list from a server, the user white list including at least one URL of the webpage resource corresponding to the access tendency of the terminal user, the at least one URL being generated by the server according to a predetermined strategy; and
a local URL generating subunit, configured to generate the local URLs by parsing URLs in the user white list.

Optionally, the white list acquiring subunit includes:
an acquisition request sending module, configured to send a white list acquisition request to the server according to a first defined cycle time, the white list acquisition request including a first router identifier, a corresponding relationship between various router identifiers and the user white lists being stored on the server; and
a white list receiving module, configured to receive a user white list corresponding to the first router identifier from the server after the server conducts a search in the corresponding relationship.

Optionally, the first storing unit includes at least one of the following subunits:
a disk storing subunit, configured to store the local URLs into a database configured in a local disk; and
a memory storing subunit, configured to cache the local URLs into a memory assigned to a kernel.

Optionally, the apparatus further includes:
a defining unit, configured to define an aging time for each URL in the local URLs stored in the database;
a scanning unit, configured to scan the aging time in the database according to a second defined cycle time; and
a deleting unit, configured to delete, according to a scanning result, an expired URL whose aging time expires from the local URLs, and delete a webpage resource corresponding to the expired URL from the local webpage resources.

Optionally, the second storing unit includes:
a webpage resource downloading subunit, configured to download a webpage resource corresponding to each URL of the at least one URL from a server;
a storage address generating subunit, configured to generate a local storage address of each webpage resource corresponding to the each URL, the local storage address being identified by using a Hash value of a URL corresponding to the each webpage resource and a webpage resource storage root directory; and
a webpage resource storing subunit, configured to store the each webpage resource into a local disk according to the local storage address of the each webpage resource.

Optionally, the acquiring unit includes:
a target URL sending subunit, configured to send the target URL to a designated port monitored by a web service;
a storage address determining subunit, configured to: when the web service has monitored the target URL at the designated port, determine a local storage address of the target webpage resource according to a Hash value of the target URL and the webpage resource storage root directory; and
a webpage resource acquiring subunit, configured to acquire the target webpage resource from the local disk according to the local storage address of the target webpage resource.

According to a third aspect of embodiments of the present disclosure, a router is provided. The router includes:
a processor; and
a memory for storing instructions executable by the processor;
wherein the processor is configured to:
receive a webpage access request from a terminal, the webpage access request including a target uniform resource locator (URL);
conduct a search in stored local URLs for the target URL;
if the target URL is detected in the local URLs, acquire a target webpage resource corresponding to the target URL from stored local webpage resources; and
send the target webpage resource to the terminal.

According to a fourth aspect of embodiments of the present disclosure, there is provided a computer program which, when being executed on a processor of an apparatus, performs any one of the above methods.

The technical solutions provided in the embodiments of the present disclosure may achieve the following beneficial effects.

According to the present disclosure, by storing the local URLs and the local webpage resources on a router, when the target URL included in the webpage access request sent by the terminal is searched out in the local URLs, the target webpage resource corresponding to the target URL may be acquired from the local webpage resources and sent to the terminal. Since the router may directly return a locally stored webpage resource to the terminal, with no need of acquiring the webpage resource from the server according to the target URL, the time elapsed when the target webpage resource is transmitted from the public network where the server is located to the local area network where the router is located is saved, and thus the speed of obtaining the target webpage resource by the terminal is increased, such that the terminal user can quickly browse the target webpage.

According to the present disclosure, the local URLs and the local webpage resources may be stored on the router. Since the URL of a webpage resource which the terminal user intends to access is stored in the local URLs, upon receiving a webpage access request from the terminal user, there is a high probability that the target URL is obtained from the local URLs, such that the target webpage resource in the local webpage resources can be quickly returned to the terminal.

According to the present disclosure, the user white list including the URL of a webpage resource which the terminal user intends to access may be acquired from the server. Since the computing capability of the server is powerful, the server may generate the URLs according to a plurality of predetermined strategies, so as to ensure that the URLs are capable of covering, to the highest probability, the URLs which the terminal user desires to access.

According to the present disclosure, the user white list may also be acquired from the server according to a predetermined cycle time. Since the server may update in real time the user white list according to current changes of a predetermined strategy, it may be ensured that the router acquires the user white list which is the latest user white list, such that the probability of searching out the target URL from the local URLs is further increased.

According to the present disclosure, the local URLs may also be stored at different locations of the router. When the local URLs are stored in the database in the local disk, it may be ensured that the local URLs will not be lost when the router is powered off. In addition, an aging time may be defined for each URL, such that when the aging time expires, the corresponding URL and webpage resource are deleted, so as to ensure that the local storage resource is not constantly occupied. When the local URLs are stored in the memory assigned to the kernel, since as compared against searching for the target URL from the local disk, it is more quickly for the kernel to search for the target URL from the memory, as such, the speed at which the terminal user browses the target webpage is further increased.

It shall be understood that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the description, serve to explain the principles of the present disclosure.
FIG. 1 is a flowchart illustrating a webpage access method according to an exemplary embodiment of the present disclosure;
FIG. 2 is a flowchart illustrating another webpage access method according to an exemplary embodiment of the present disclosure;
FIG. 3 is a schematic diagram illustrating an application scenario of webpage access according to an exemplary embodiment of the present disclosure;
FIG. 4 is a block diagram illustrating a webpage access apparatus according to an exemplary embodiment of the present disclosure;
FIG. 5 is a block diagram illustrating another webpage access apparatus according to an exemplary embodiment of the present disclosure;
FIG 6 is a block diagram illustrating another webpage access apparatus according to an exemplary embodiment of the present disclosure;
FIG. 7 is a block diagram illustrating another webpage access apparatus according to an exemplary embodiment of the present disclosure;
FIG. 8 is a block diagram illustrating another webpage access apparatus according to an exemplary embodiment of the present disclosure;
FIG 9 is a block diagram illustrating another webpage access apparatus according to an exemplary embodiment of the present disclosure;
FIG. 10 is a block diagram illustrating another webpage access apparatus according to an exemplary embodiment of the present disclosure;
FIG 11 is a block diagram illustrating another webpage access apparatus according to an exemplary embodiment of the present disclosure; and
FIG. 12 is a schematic structural diagram illustrating a webpage access apparatus according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terminology used in the present disclosure is for the purpose of describing particular embodiments only and is not intended to limit the present disclosure. As used in the present disclosure and the appended claims, the singular forms "a", "an" and "the" are intended to include the plural forms as well, unless the context clearly indicates otherwise. It shall also be understood that the term "and/or" used herein is intended to signify and include any or all possible combinations of one or more of the associated listed items.

It shall be understood that, although the terms "first", "second", "third", etc. may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if" may be understood to mean "when" or "upon" or "in response to determining" depending on the context.

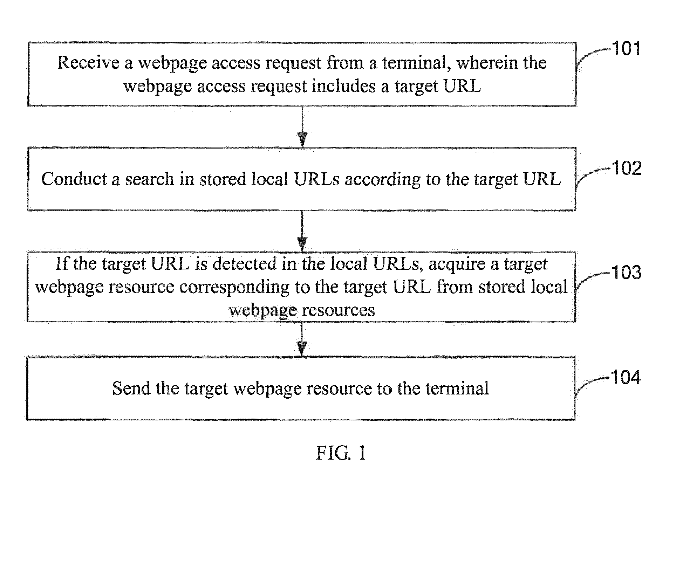

FIG. 1 is a flowchart illustrating a webpage access method according to an exemplary embodiment of the present disclosure. As illustrated in FIG. 1, the webpage access method is applicable to a router, and includes the following steps.

In step 101, a webpage access request is received from a terminal, wherein the webpage access request includes a target URL.

The router according to the present disclosure is used as a smart router device, which not only has the traditional routing function, but also further includes an independent operating system and disk. The terminal according to the present disclosure may be any smart terminal having the Internet access function, for example, a mobile phone, a tablet computer, a personal digital assistant (PDA), or the like. The terminal may access the router via a wireless local area network, and access servers on the public network via the router.

The URL is a brief expression of a location and an access method for obtaining a resource over the Internet, and is a standard resource address on the Internet. Each webpage resource on the Internet has a unique URL. In the present disclosure, when a terminal user desires to access a certain target webpage, the terminal user enters a target URL of the target webpage on a browser of the terminal, and the terminal sends a webpage access request including the target URL to the router, wherein the webpage access request is typically a Hypertext Transfer Protocol (HTTP) request.

In step 102, a search is conducted in stored local URLs for the target URL.

In the present disclosure, upon obtaining local URLs constituted by URLs of webpage resources corresponding to access tendencies of the terminal users, the router may store the local URLs, and store local webpage resources constituted by a webpage resource corresponding to at least one URL among the local URLs. During acquisition of the local URLs, the router obtains a user white list from a server. The server may be a server configured on the public network for webpage preloading analysis. The server may generate user white lists for different routers according to predetermined strategies, wherein the user white list includes the URLs of the webpage resources corresponding to the access tendencies of the terminal users.

Based on the above local URLs, upon receiving a webpage access request from a terminal, the router may conduct a search in the local URLs for the target URL included in the webpage access request, so as to determine whether the target URL can be detected in the local URLs.

In step 103, if the target URL is detected in the local URLs, a target webpage resource corresponding to the target URL is acquired from stored local webpage resources.

After the target URL is detected in the local URLs, it indicates that the target webpage resource has been stored locally in the router. Therefore, the target webpage resource may be o directly acquired from the local webpage resources.

In step 104, the target webpage resource is sent to the terminal.

In the above embodiment, by storing the local URLs and the local webpage resources on the router, when the target URL included in the webpage access request sent by the terminal is searched out in the local URLs, the target webpage resource corresponding to the target URL may be acquired from the local webpage resources and sent to the terminal. Since the router may directly return a locally stored webpage resource to the terminal, with no need of acquiring the webpage resource from the server according to the target URL, the time elapsed when the target webpage resource is transmitted from the public network where the server is located to the local area network where the router is located is saved, and thus the speed of obtaining the target webpage resource by the terminal is increased, such that the terminal user can quickly browse the target webpage.

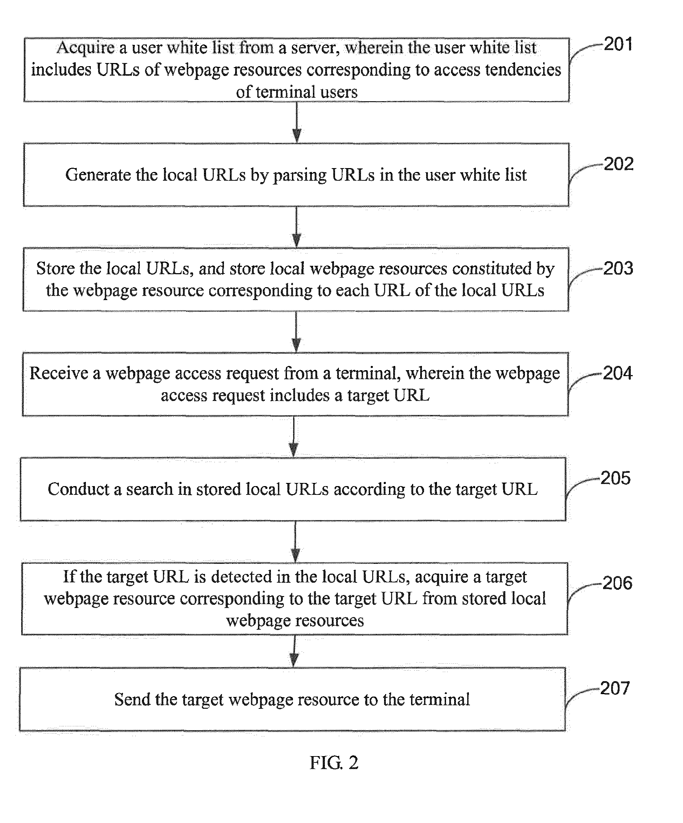

FIG. 2 is a flowchart illustrating another webpage access method according to an exemplary embodiment of the present disclosure. As illustrated in FIG. 2, the webpage access method is applicable to a router, and includes the following steps.

In step 201, a user white list is acquired from a server, wherein the user white list includes URLs of webpage resources corresponding to access tendencies of terminal users.

The router according to the present disclosure acts as a smart router device, which not only has the traditional routing functions such as the switching and forwarding functions, but also includes an independent operating system and disk. The size of a storage space of the disk may be flexibly and adaptively configured according to actual needs, for example, being configured as 1 T.

The server according to the present disclosure may be a server configured on the public network for webpage preloading analysis. The server may generate user white lists for different routers according to predetermined strategies based on a machine learning algorithm. The user white list includes the URL of a webpage resource corresponding to a repeated access of a terminal user. The server stores a corresponding relationship between various router identifiers and the user white lists. The router identifier may be specifically a media access control (MAC) address of the router. The URLs of the webpage resources corresponding to the access tendencies of the terminal users may include: history URLs of webpage resources accessed by the terminal users accessing the public network via the same router; or URLs of the webpage resources about hot topics on the current social networking platform; or URLs of several hot portal websites which are highly probable to be accessed by the terminal users.

When the router is powered on and started, the user white lists are initially acquired by the router from the server. Since the user white lists on the server may be subsequently updated, the router may acquire the user white lists from the server according to a first defined cycle time, so as to ensure that the user white lists on the router are synchronized with the user white lists on the server.

During acquisition of the user white lists, the router sends a white list acquisition request to the server, wherein the white list acquisition request includes a first router identifier of the router. The server conducts a search in the stored corresponding relationship between the router identifiers and the user white lists according to the first router identifier, and sends the searched user white list corresponding to the first router identifier to the router.

Optionally, if the computation and processing capabilities of the router are sufficiently powerful, the router may determine by itself the access tendencies of the terminal users according to specific strategies, and locally generate the user white lists. Such implementation manner for acquiring the local URLs also falls within the protection scope of the present disclosure.

In step 202, local URLs are generated by parsing URLs in the user white list.

Upon receiving a user white list, the router parses the user white list to obtain at least one URL contained therein, and generates the local URLs according to the at least one URL. According to different formats of the user white list, different parsing manners may be employed to parse the user white list, which is not limited in this embodiment.

In step 203, the local URLs are stored, and local webpage resources constituted by the webpage resource corresponding to each URL of the local URLs are stored.

The local URLs may be stored in at least one of the following manners.

In a first manner, the router may store the local URLs into a database configured in a local disk. To be specific, the router may preconfigure an application to perform the operation for storing the local URLs into the database, wherein by running the application, each of the URLs obtained by parsing the user white list may be input to the database. Each of the URLs corresponds to one data record in the database. To prevent the local storage resources from being constantly occupied, an aging time threshold for the URL may be further configured in each data record. Correspondingly, the router may scan the aging time threshold of each data record in the database according to a second defined cycle time, and delete, according to a scanning result, the data record corresponding to a URL whose aging time threshold expire has from the database.

In a second manner, the router may cache the local URLs into a memory assigned to a kernel. To be specific, the router may preconfigure an application to implement communication between an application layer and a kernel layer. The application may employ a Netlink Socket mechanism, and notify each URL obtained by parsing the white list to the kernel. The kernel stores the URLs into the memory assigned to the kernel. It shall be noted that with reference to the subsequent operation for storing the local webpage resources, with respect to each URL, after the webpage resource corresponding to the URL is successfully downloaded as the local webpage resource, the URL may be subsequently notified to the kernel, which is not limited in this embodiment.

With respect to the first manner, since the local URLs are stored in the disk, it may be ensured that the local URLs will not be lost when the router is powered off, and maintenance operations for the local URLs may be implemented. With respect to the second manner, since the speed at which the kernel accesses the memory is higher than the speed of accessing the disk via the application, the speed of subsequently searching for the target URL may be increased by storing the local URLs into the memory.

The local webpage resources may be stored in the following manner:

The router downloads a webpage resource corresponding to each URL of the local URLs from different website servers in the public network, and generates a local storage address of each webpage resource corresponding to each URL. The local storage address may be identified by using a Hash value of the URL corresponding to each webpage resource and a webpage resource storage root directory. For example, assume that the webpage resource storage root directory on the router is "/cache/data", the Hash value of the URL is "ADKEOCOWENLFOJFSELINXO3234%2DS", then the corresponding local storage address is "/cache/data/ADKEOCOWENLFOJFSELINX03234%2DS". Then the router stores each webpage resource into the local disk according to the local storage address of each webpage resource.

In addition, corresponding to the aforesaid first manner for storing the local URLs, if an aging time threshold is defined for each URL in the database, when the aging time threshold of the URL expires, in addition to deleting the data record corresponding to the expired URL from the database, if the memory of the kernel also stores the local URLs, then the expired URL may also be deleted from the memory of the kernel, and additionally the webpage resource corresponding to the expired URL may be deleted from the local webpage resources in the disk, such that the local URLs and the local webpage resources are uniformly updated.

In step 204, a webpage access request is received from a terminal, wherein the webpage access request includes a target URL.

When the terminal user desires to access a certain target webpage, the terminal user enters a target URL of the target webpage on a browser of the terminal, and the terminal sends a webpage access request including the target URL to the router, wherein the webpage access request is typically an HTTP request.

In step 205, a search is conducted in the stored local URLs according to the target URL.

When the memory of the kernel stores the local URLs, upon receiving a webpage access request from a terminal, the router may hijack the webpage access request by using a kernel protocol stack to obtain the target URL, and conduct a search in the local URLs stored in the memory according to the target URL, so as to determine whether the target URL can be searched out in the local URLs.

In step 206, if the target URL is detected in the local URLs, a target webpage resource corresponding to the target URL is acquired from stored local webpage resources.

With reference to step 205, if the target URL is detected in the local URLs, it indicates that the local disk of the router stores a target webpage resource corresponding to the target URL, so there is no need of acquiring the target webpage resource from the server in the public network. In this case, the kernel of the router may send the detected target URL to a designated port monitored by a web service in the router. For example, when the web service is specifically a proxy service "nginx", the designated port may be specifically the port "80". When the web service has monitored the target URL at the designated port, being consistent with the manner for determining the local storage address during storing of the local webpage resource in step 205, the local storage address of the target webpage resource may be determined according to a Hash value of the target URL and a webpage resource storage root directory, and the target webpage resource may be acquired from the local disk according to the local storage address, such that the server directly sends the locally stored target webpage resource to the terminal. As such, webpage access of the terminal is implemented within a local area network.

In step 207, the target webpage resource is sent to the terminal.

In the above embodiment, by storing the local URLs and the local webpage resources on the router, when the target URL included in the webpage access request sent by the terminal is detected in the local URLs, the target webpage resource corresponding to the target URL may be acquired from the local webpage resources and sent to the terminal. Since the router may directly return the locally stored webpage resource to the terminal, with no need of acquiring the webpage resource from the server according to the target URL, the time elapsed when the target webpage resource is transmitted from the public network where the server is located to the local area network where the router is located is saved, and thus the speed of obtaining the target webpage resource by the terminal is increased, such that the terminal user can quickly browse the target webpage. In addition, the local URLs and the local webpage resources may be stored on the router. Since the URL of a webpage resource which the terminal user intends to access is stored in the local URLs, upon receiving a webpage access request from the terminal user, there is a high probability that the target URL is obtained from the local URLs, such that the target webpage resource in the local webpage resources can be quickly returned to the terminal.

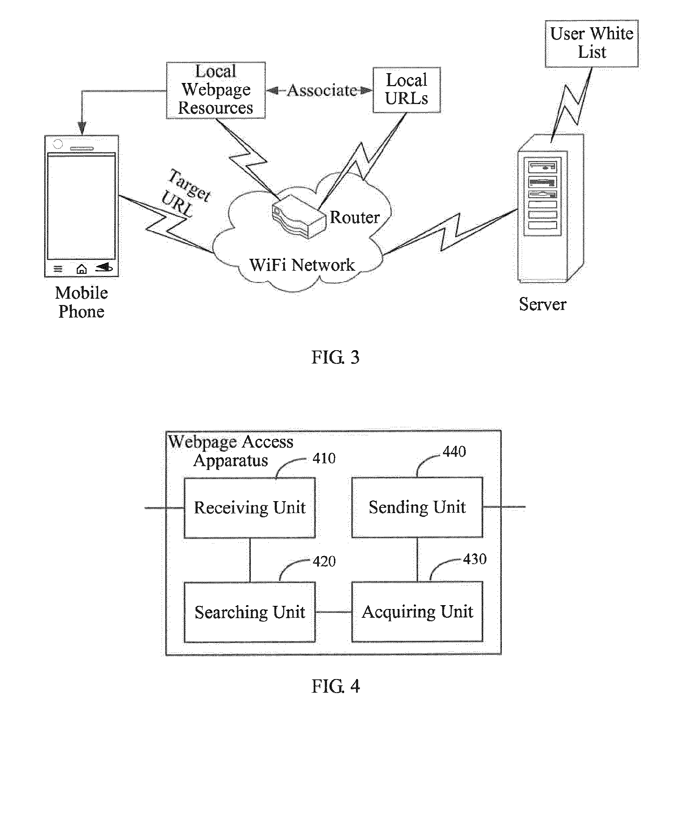

With reference to the embodiments as illustrated in FIG. 1 and FIG. 2, referring to FIG. 3, a schematic diagram illustrating an application scenario of webpage access according to an exemplary embodiment of the present disclosure is given.

FIG. 3 illustrates a mobile phone, a router, and a server. The mobile phone accesses the router via a WiFi network, and the router is connected to the server in the public network. It may be understood that the terminal in this embodiment is merely illustrated by using a mobile phone as an example, and in practice, the terminal may be terminal devices capable of accessing webpages, such as a PC or a tablet computer. The terminal and the router may be connected either via a WiFi network or via a wired network, which is not limited in this embodiment. The server maintains a user white list; and the router acquires the local URLs according to the user white list and pre-downloads the local webpage resources according to the local URLs, wherein each URL of the local URLs corresponds to one webpage resource in the local webpage resources. When a mobile phone user enters a target URL of a target webpage which the user desires to access, the mobile phone transmits the target URL to the router via a WiFi network; and when searching for the target URL in the local URLs, the router may directly acquire a target webpage resource corresponding to the target URL from the local webpage resources, and send the target webpage resource to the mobile phone, such that the target webpage can be quickly displayed on a browser of the mobile phone. As such, the mobile phone user can quickly browse the desired webpage.

In the application scenario as illustrated in FIG. 3, the specific process of implementing webpage access may be referred to the descriptions of FIG. 1 and FIG. 2, which is not described herein any further.

Corresponding to the method embodiments illustrating the webpage access method, the present disclosure further provides embodiments illustrating a webpage access apparatus and a router applied therein.

FIG 4 is a block diagram illustrating a webpage access apparatus according to an exemplary embodiment of the present disclosure. The apparatus includes: a receiving unit 410, a searching unit 420, an acquiring unit 430, and a sending unit 440.

The receiving unit 410 is configured to receive a webpage access request from a terminal, the webpage access request including a target URL.

The searching unit 420 is configured to conduct a search in stored local URLs according to the target URL.

The acquiring unit 430 is configured to acquire a target webpage resource corresponding to the target URL from stored local webpage resources, if the target URL is searched out in the local URLs.

The sending unit 440 is configured to send the target webpage resource to the terminal.

In the above embodiment, by storing the local URLs and the local webpage resources, when the target URL included in the webpage access request sent by the terminal is searched out in the local URLs, the target webpage resource corresponding to the target URL may be acquired from the local webpage resources and sent to the terminal. Since the router may directly return a locally stored webpage resource to the terminal, with no need of acquiring the webpage resource from the server according to the target URL, the time elapsed when the target webpage resource is transmitted from the public network where the server is located to the local area network where the router is located is saved, and thus the speed of obtaining the target webpage resource by the terminal is increased, such that the terminal user can quickly browse the target webpage.

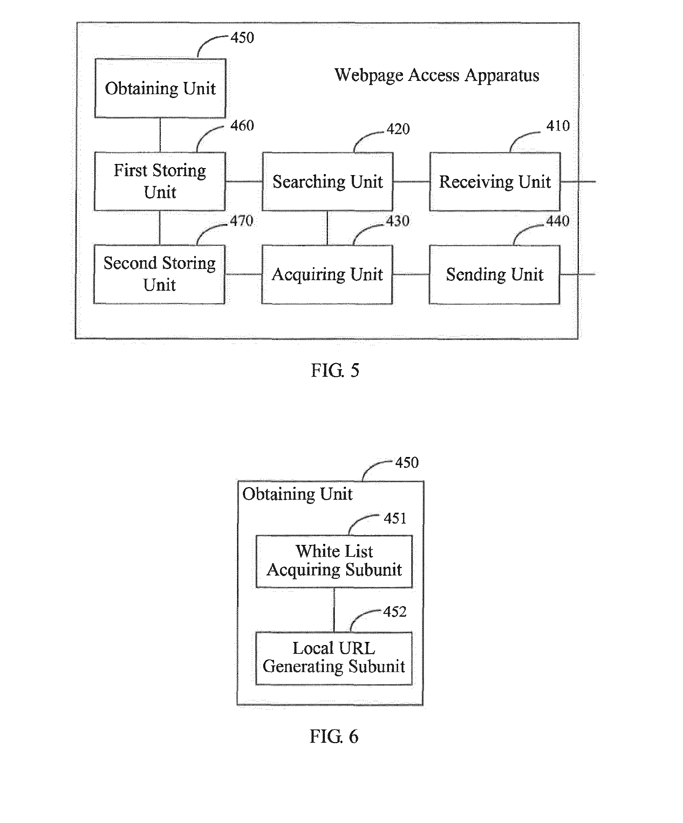

FIG. 5 is a block diagram illustrating another webpage access apparatus according to an exemplary embodiment of the present disclosure. This embodiment is based on the embodiment as illustrated in FIG 4. The apparatus may further include: an obtaining unit 450, a first storing unit 460, and a second storing unit 470.

The obtaining unit 450 is configured to obtain the local URLs, the local URLs including at least one URL, the at least one URL being a URL of a webpage resource corresponding to a repeated access of a terminal user.

The first storing unit 460 is configured to store the local URLs.

The second storing unit 470 is configured to store a local webpage resource constituted by the webpage resource corresponding to the at least one URL.

In the above embodiment, the local URLs and the local webpage resources may be stored on the router. Since the URL of a webpage resource which the terminal user intends to access is stored in the local URLs, upon receiving a webpage access request from the terminal user, there is a high probability that the target URL is obtained from the local URLs, such that the target webpage resource in the local webpage resources can be quickly returned to the terminal.

FIG. 6 is a block diagram illustrating another webpage access apparatus according to an exemplary embodiment of the present disclosure. This embodiment is based on the embodiment as illustrated in FIG. 5. The obtaining unit 450 may include: a white list acquiring subunit 451 and a local URL generating subunit 452.

The white list acquiring subunit 451 is configured to acquire a user white list from a server, the user white list including at least one URL of the webpage resource corresponding to the access tendency of the terminal user, the at least one URL being generated by the server according to a predetermined strategy.

The local URL generating subunit 452 is configured to generate the local URLs by parsing URLs in the user white list.

In the above embodiment, the user white list including the URL of a webpage resource which the terminal user intends to access may be acquired from the server. Since the computing capability of the server is powerful, the server may generate the URLs according to a plurality of predetermined strategies, so as to ensure that the URLs are capable of covering, to the highest probability, the URLs which the terminal user desires to access.

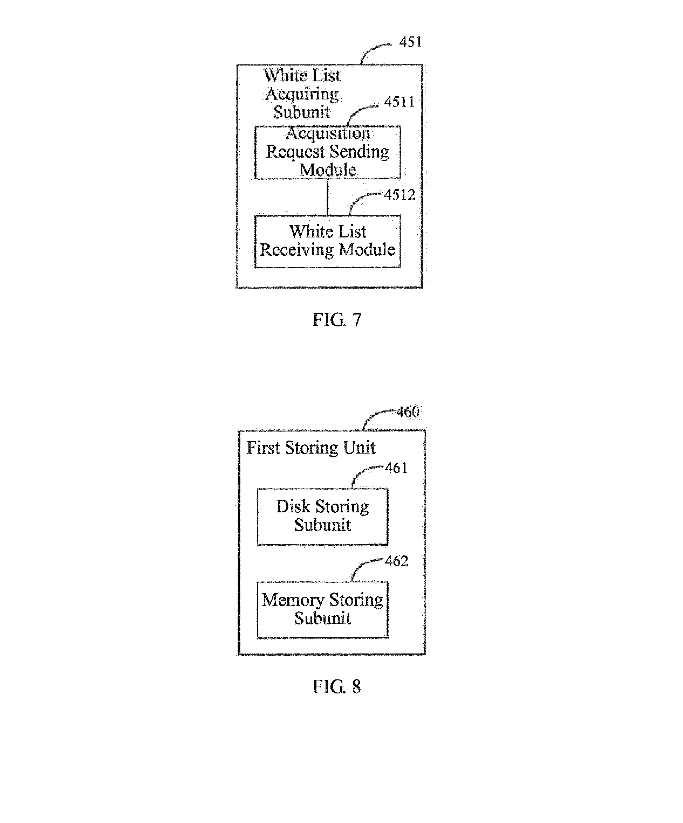

FIG. 7 is a block diagram illustrating another webpage access apparatus according to an exemplary embodiment of the present disclosure. This embodiment is based on the embodiment as illustrated in FIG. 6. The white list acquiring subunit 451 may include: an acquisition request sending module 4511 and a white list receiving module 4512.

The acquisition request sending module 4511 is configured to send a white list acquisition request to the server according to a first defined cycle time, the white list acquisition request including a first router identifier, a corresponding relationship between various router identifiers and the user white lists being stored on the server.

The white list receiving module 4512 is configured to receive a user white list corresponding to the first router identifier from the server after the server conducts a search in the corresponding relationship.

In the above embodiment, the user white list may be acquired from the server according to a predetermined cycle time. Since the server may update in real time the user white list according to current changes of predetermined strategy, it may be ensured that the router acquires the user white list which is the latest user white list, such that the probability of searching out the target URL from the local URLs is further increased.

FIG 8 is a block diagram illustrating another webpage access apparatus according to an exemplary embodiment of the present disclosure. This embodiment is based on the embodiment as illustrated in FIG 5. The first storing unit 460 may include at least one of the following subunits: a disk storing subunit 461 and a memory storing subunit 462. For ease of exemplification, FIG. 8 simultaneously illustrates the above two subunits. In practice, any one of the above two subunits may be included, which is not limited in this embodiment.

The disk storing subunit 461 is configured to store the local URLs into a database configured in a local disk.

The memory storing subunit 462 is configured to cache the local URLs into a memory assigned to a kernel.

In the above embodiment, the local URLs may be stored at different locations of the router. When the local URLs are stored in the database in the local disk, it may be ensured that the local URLs will not be lost when the router is powered off. When the local URLs are stored in the memory assigned to the kernel, since as compared against searching for the target URL from the local disk, it is more quickly for the kernel to search for the target URL from the memory. As such, the speed at which the terminal user browses the target webpage is further increased.

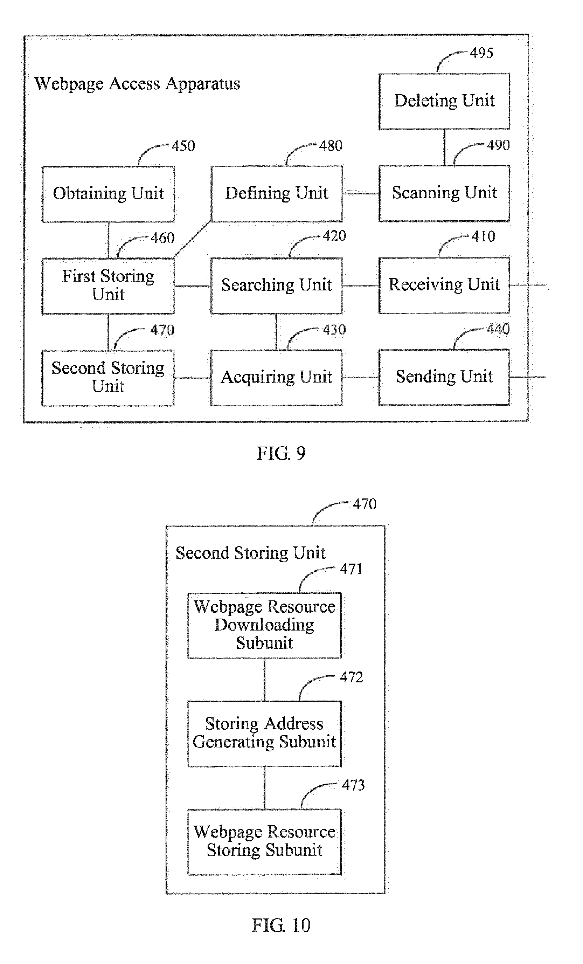

FIG 9 is a block diagram illustrating another webpage access apparatus according to an exemplary embodiment of the present disclosure. This embodiment is based on the embodiment as illustrated in FIG. 8. The apparatus may further include: a defining unit 480, a scanning unit 490, and a deleting unit 495.

The defining unit 480 is configured to define an aging time threshold for each URL in the local URLs stored in the database.

The scanning unit 490 is configured to scan the aging time threshold in the database according to a second defined cycle time.

The deleting unit 495 is configured to delete, according to a scanning result, an expired URL whose aging time threshold expires from the local URLs, and delete a webpage resource corresponding to the expired URL from the local webpage resources.

In the above embodiment, an aging time threshold may be defined for each URL in the database, such that when the aging time expires, the corresponding URL and webpage resource are deleted, so as to ensure that the local storage resource is not constantly occupied.

FIG. 10 is a block diagram illustrating another webpage access apparatus according to an exemplary embodiment of the present disclosure. This embodiment is based on the embodiment as illustrated in FIG. 5. The second storing unit 470 may include: a webpage resource downloading subunit 471, a storage address generating subunit 472, and a webpage resource storing subunit 473.

The webpage resource downloading subunit 471 is configured to download a webpage resource corresponding to each URL of the at least one URL from a server.

The storage address generating subunit 472 is configured to generate a local storage address of each webpage resource corresponding to the each URL, the local storage address being identified by using a Hash value of a URL corresponding to the each webpage resource and a webpage resource storage root directory.

The webpage resource storing subunit 473 is configured to store the each webpage resource into a local disk according to the local storage address of the each webpage resource.

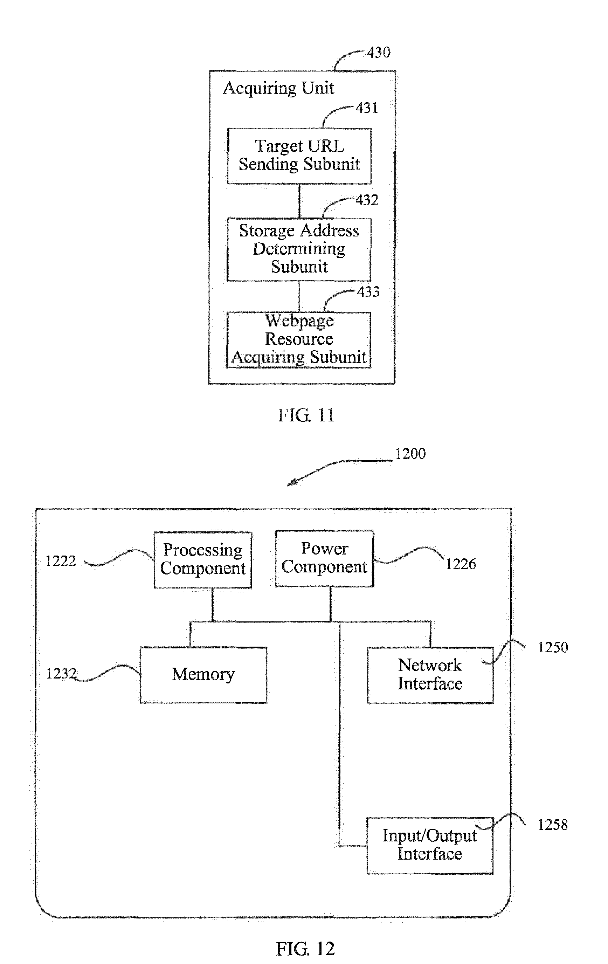

FIG 11 is a block diagram illustrating another webpage access apparatus according to an exemplary embodiment of the present disclosure. This embodiment is based on the embodiment as illustrated in FIG. 10. The acquiring unit 430 may include: a target URL sending subunit 431, a storage address determining subunit 432, and a webpage resource acquiring subunit 433.

The target URL sending subunit 431 is configured to send the target URL to a designated port monitored by a web service.

The storage address determining subunit 432 is configured to: when the web service has monitored the target URL at the designated port, determine a local storage address of the target webpage resource according to a Hash value of the target URL and the webpage resource storage root directory.

The webpage resource acquiring subunit 433 is configured to acquire the target webpage resource from the local disk according to the local storage address of the target webpage resource.

Specific implementation of functions and effects of various units in the above apparatuses may be referenced to the implementation of the corresponding steps in the aforesaid methods, which is thus not described herein any further.

With respect to the apparatus embodiments, since the apparatus embodiments are based on the method embodiments, relevant parts may be referenced to the equivalents in the method embodiments. The above-described apparatus embodiments are merely exemplary. The units used as separate components may be or may not be physically independent of each other. The element illustrated as a unit may be or may not be a physical unit, that is, may be either located at a position or deployed on a plurality of network units. Part of or all of the modules may be selected as required to implement the technical solutions disclosed in the embodiments of the present disclosure. Persons of ordinary skills in the art may understand and implement the embodiments without any creative effort.

Correspondingly, the present disclosure provides a router, wherein the router includes a processor and a memory for storing instructions executable by the processor. The processor is configured to:
receive a webpage access request from a terminal, the webpage access request including a target uniform resource locator (URL);
conduct a search in stored local URLs according to the target URL;
if the target URL is detected in the local URLs, acquire a target webpage resource corresponding to the target URL from stored local webpage resources; and
send the target webpage resource to the terminal.

FIG 12 is a schematic structural diagram illustrating a webpage access apparatus 1200 according to an exemplary embodiment of the present disclosure. For example, the apparatus 1200 may be provided as a router device. Referring to FIG. 12, the apparatus 1200 includes a processing component 1222, which further includes one or more processors and memory resources represented by a memory 1232, configured to store instructions executable by the processing component 1222, for example, applications. The applications stored in the memory 1232 may include one or more than one module each corresponding to a group of instructions. In addition, the processing component 1222 is configured to execute the instructions, to perform the above webpage access methods.

The apparatus 1200 may further include: a power component 1226, configured to perform power management in the apparatus 1200; a wired or wireless network interface 1250, configured to connect the apparatus 1200 to the network; and an input/output (I/O) interface 1258. The apparatus 1200 may operate an operating system stored in the memory 1232, for example, Windows ServerTM, Mac OS XTM, UnixTM, LinuxTM, FreeBSDTM, or the like.

Other embodiments of the present disclosure will be apparent to those skilled in the art from consideration of the specification and practice disclosed herein. This application is intended to cover any variations, uses, or adaptive variations of the present disclosure following the general principles thereof and including such departures from the present disclosure as coming within common knowledge or customary technical means in the art. It is intended that the specification and embodiments be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A webpage access method for use in a router, comprising:
receiving (101) a webpage access request from a terminal, the webpage access request comprising a target uniform resource locator (URL);
conducting (102) a search in stored local URLs according to the target URL;
if the target URL is detected in the local URLs, acquiring (103) a target webpage resource corresponding to the target URL from stored local webpage resources; and
sending (104) the target webpage resource to the terminal.

2. The method according to claim 1, **characterized in that** prior to the receiving a webpage access request from a terminal, the method further comprises:
obtaining the local URLs, the local URLs comprising at least one URL, the at least one URL being a URL of a webpage resource corresponding to a frequent access of a terminal user; and
storing the local URLs, and storing a local webpage resource constituted by the webpage resource corresponding to the at least one URL.

3. The method according to claim 2, **characterized in that** the obtaining the local URLs comprises:
acquiring (201) a user white list from a server, the user white list comprising at least one URL of the webpage resource corresponding to the frequent access of the terminal user, the at least one URL being generated by the server according to a predetermined strategy; and
generating (202) the local URLs by parsing URLs in the user white list.

4. The method according to claim 3, **characterized in that** the acquiring a user white list from a server comprises:
sending a white list acquisition request to the server according to a first defined cycle time, the white list acquisition request comprising a first router identifier, a corresponding relationship between various router identifiers and the user white lists being stored on the server; and
receiving a user white list corresponding to the first router identifier from the server after the server conducts a search in the corresponding relationship.

5. The method according to claim 2, **characterized in that** the storing the local URLs comprises:
storing the local URLs into a database configured in a local disk; and/or
caching the local URLs into a memory assigned to a kernel of the router.

6. The method according to claim 5, **characterized in that** the method further comprises:
defining an aging time threshold for each URL in the local URLs stored in the database;
scanning the aging time threshold in the database according to a second defined cycle time; and
deleting, according to a scanning result, an expired URL whose aging time threshold expires from the local URLs, and deleting a webpage resource corresponding to the expired URL from the local webpage resources.

7. The method according to claim 2, **characterized in that** the storing a local webpage resource constituted by the webpage resource corresponding to the at least one URL comprises:
downloading a webpage resource corresponding to each URL of the at least one URL from a server;
generating a local storage address of each webpage resource corresponding to the each URL, the local storage address being identified by using a Hash value of a URL corresponding to the each webpage resource and a webpage resource storage root directory; and
storing the each webpage resource into a local disk according to the local storage address of the each webpage resource.

8. The method according to claim 7, **characterized in that** the acquiring a target webpage resource corresponding to the target URL from stored local webpage resources comprises:
sending the target URL to a designated port monitored by a web service;
when the web service has monitored the target URL at the designated port, determining a local storage address of the target webpage resource according to a Hash value of the target URL and the webpage resource storage root directory; and
acquiring the target webpage resource from the local disk according to the local storage address of the target webpage resource.

9. A webpage access apparatus for use in a router, comprising:
a receiving unit (410), configured to receive a webpage access request from a terminal, the webpage access request comprising a target uniform resource locator (URL);
a searching unit (420), configured to conduct a search in stored local URLs according to the target URL;
an acquiring unit (430), configured to acquire a target webpage resource corresponding to the target URL from stored local webpage resources if the target URL is detected in the local URLs; and
a sending unit (440), configured to send the target webpage resource to the terminal.

10. The apparatus according to claim 9, **characterized in that** the apparatus further comprises:
an obtaining unit (450), configured to obtain the local URLs, the local URLs comprising at least one URL, the at least one URL being a URL of a webpage resource corresponding to an access tendency of a terminal user;
a first storing unit (460), configured to store the local URLs; and
a second storing unit (470), configured to store a local webpage resource constituted by the webpage resource corresponding to the at least one URL.

11. The apparatus according to claim 10, **characterized in that** the obtaining unit (450) comprises:
a white list acquiring subunit (451), configured to acquire a user white list from a server, the user white list comprising at least one URL of the webpage resource corresponding to the access tendency of the terminal user, the at least one URL being generated by the server according to a predetermined strategy; and
a local URL generating subunit (452), configured to generate the local URLs by parsing URLs in the user white list.

12. The apparatus according to claim 11, **characterized in that** the white list acquiring subunit (451) comprises:
an acquisition request sending module (4511), configured to send a white list acquisition request to the server according to a first defined cycle time, the white list acquisition request comprising a first router identifier, a corresponding relationship between various router identifiers and the user white lists being stored on the server; and
a white list receiving module (4512), configured to receive a user white list corresponding to the first router identifier from the server after the server conducts a search in the corresponding relationship.

13. The apparatus according to claim 10, **characterized in that** the first storing unit (460) comprises at least one of the following subunits:
a disk storing subunit (461), configured to store the local URLs into a database configured in a local disk; and
a memory storing subunit (462), configured to cache the local URLs into a memory assigned to a kernel of the router.

14. A router, comprising:
a processor; and
a memory for storing instructions executable by the processor;
wherein the processor is configured to:
receive a webpage access request from a terminal, the webpage access request comprising a target uniform resource locator (URL);
conduct a search in stored local URLs according to the target URL;
if the target URL is searched out in the local URLs, acquire a target webpage resource corresponding to the target URL from stored local webpage resources; and
send the target webpage resource to the terminal.

15. A computer program which, when being executed on a processor of an apparatus, performs a method according to any one of claims 1 to 8.
